# FASCICULE DE BREVET EUROPEEN

(11) **EP 1 456 596 B1**
(45) Date de publication et mention de la délivrance du brevet: **10.12.2008**
(21) Numéro de dépôt: 02804939.3
(22) Date de dépôt: 18.12.2002
(51) Int. Cl.: F28F 9/00, B62D 25/08

(54) **ASSEMBLAGE PERFECTIONNE POUR MAINTENIR UN EQUIPEMENT DE VEHICULE AUTOMOBILE ET PRESERVER CET EQUIPEMENT EN CAS DE CHOC**
VERBESSERTE ANORDNUNG ZUR INSTANDHALTUNG EINER KRAFTFAHRZEUGAUSRÜSTUNG UND SCHUTZ DER AUSRÜSTUNG BEI EINEM AUFPRALL
IMPROVED ASSEMBLY FOR MAINTAINING A MOTOR VEHICLE EQUIPMENT AND PROTECTING SAID EQUIPMENT IN CASE OF IMPACT

(30) Priorité: 19.12.2001 FR 0116478
(43) Date de publication de la demande: 15.09.2004
(73) Titulaire: VALEO SYSTEMES THERMIQUES, 78320 Le Mesnil Saint-Denis (FR)
(72) Inventeur: GUINEHUT, Sébastien, F-75014 Paris (FR); COURRIAN, Cédric, F-91160 Longjumeau (FR); HARAND, Pascal, F-78190 Trappes (FR); GUYOMARD, Jean-Nicolas, F-27930 Le Mesnil Fuguet (FR)
(74) Mandataire: Rolland, Jean-Christophe
(86) Numéro de dépôt international: PCT/FR2002/004418
(87) Numéro de publication internationale: WO 2003/052341

(56) Documents cités:
- EP-A- 0 908 375
- EP-A- 1 106 413
- EP-A- 1 110 788
- FR-A- 2 762 077
- FR-A- 2 764 858
- FR-A- 2 796 109

## Description

L'invention concerne le montage d'équipements de véhicule automobile.

Elle concerne plus particulièrement l'assemblage d'un équipement de véhicule automobile, tel qu'un module d'échange de chaleur, et d'un dispositif de maintien dudit équipement selon le préambule de la revendication 1. Un tel assemblage est connu du document EP-A-1 106 413.

Le module d'échange de chaleur comprend habituellement, dans sa version la plus simple, un échangeur de chaleur tel que le radiateur de refroidissement du moteur du véhicule. Le module peut comprendre en outre au moins un autre échangeur de chaleur, par exemple un condenseur d'une boucle de climatisation, et, éventuellement, un groupe moto-ventilateur propre à générer un flux d'air traversant le ou les échangeurs de chaleur composant le module.

Ce module d'échange de chaleur doit être monté sur une structure porteuse du véhicule automobile, c'est-à-dire, généralement soit sur une poutre supérieure et une poutre inférieure faisant partie de la caisse du véhicule, soit encore un support ou module de face avant, prêt à être monté sur le véhicule par le constructeur.

Le support de face avant est un élément de structure du véhicule, qui est susceptible d'intégrer divers équipements du véhicule, tels que projecteurs, clignotants, avertisseur sonore, échangeur thermique, groupe moto-ventilateur ou module de refroidissement complet, etc.

Jusqu'à présent, le module d'échange de chaleur est fixé sur la structure porteuse du véhicule par l'intermédiaire de plots, généralement deux plots d'un premier type placé en partie inférieure du module et deux plots d'un autre type, placés en partie supérieure du module.

Le module d'échange de chaleur doit ainsi être maintenu par la structure porteuse mais il est souhaité en outre de limiter les dégradations de l'équipement qui seraient occasionnées par un choc accidentel, d'absorber les vibrations en service et de compenser les variations de dimensions dues aux dilatations thermiques.

Dans la demande FR-9704341 de la Demanderesse, ces plots sont montés sur des pions issus des boîtes collectrices d'un échangeur de chaleur du module, et les pions présentent des zones de faiblesse en lesquelles, en cas ce choc, les pions se rompent, ce qui permet de préserver les boîtes collectrices au moins de l'équipement.

Ainsi, il faut prévoir des moyens de fixation mécanique, tels que des vis ou des chevilles, qui sont rapportés pour réaliser un verrouillage entre les plots et la structure porteuse.

Par conséquent, cette technique de montage connue nécessite la mise en place d'éléments rapportés, impliquant un surcoût du fait de la nécessité de prévoir des pièces supplémentaires et du temps nécessaire à leur montage dans le processus d'assemblage.

La présente invention vient améliorer la situation.

Elle porte donc sur un assemblage d'un équipement de véhicule automobile, comprenant les caractéristiques de la revendication 1.

Selon une première caractéristique de l'invention, le logement assure un guidage en translation du plot, ce qui permet de préserver l'équipement en cas de choc du véhicule.

De manière avantageuse, le logement est sensiblement oblong, de préférence dans la direction de déplacement du véhicule.

Le logement comporte une première ouverture destinée à recevoir le plot dans une position normale de maintien de l'équipement, en service, ainsi qu'une seconde ouverture destinée à recevoir le plot en cas de choc du véhicule. Les première et seconde ouvertures sont alors séparées par un couloir sensiblement plus étroit que les ouvertures.

Selon une autre caractéristique avantageuse, le logement se prolonge par un couloir d'entrée sensiblement plus étroit que le logement, ce qui permet d'introduire le plot dans le logement par encliquetage.

Dans un premier mode de réalisation, le dispositif comporte au moins une patte sensiblement élastique dans laquelle est formé le logement.

Préférentiellement, la patte comprend deux doigts sensiblement symétriques, entre lesquels est formé ledit logement et chaque doigt présente sensiblement une forme de W, de sorte que les deux doigts définissent ensemble les première et seconde ouvertures précitées, séparées par un rétrécissement formant ledit couloir.

Dans un second mode de réalisation, le dispositif comporte un bloc amortisseur dans lequel est formé le logement, ainsi qu'un réceptacle muni de moyens d'encliquetage du bloc amortisseur dans le réceptacle.

Préférentiellement, le dispositif de maintien comporte en outre une surface d'appui, solidaire du réceptacle et destinée à venir en contact avec une extrémité du plot faisant saillie hors du logement, ce qui permet d'amortir, en service, les vibrations du plot dans une direction sensiblement parallèle à l'axe général du plot.

La présente invention vise aussi un plot d'un équipement de véhicule automobile, du type ci-avant et destiné donc à être introduit dans un logement d'un dispositif de maintien selon l'invention. Le plot comporte avantageusement un enrobage amortisseur au moins dans une partie destinée à venir dans le logement.

D'autres caractéristiques et avantages de l'invention apparaîtront à l'examen de la description détaillée ci-après, et des dessins annexés sur lesquels :
- la figure 1 représente schématiquement un support de face avant de véhicule, sur lequel sont fixés un radiateur de refroidissement du moteur du véhicule, un condenseur d'une boucle de climatisation de l'habitacle du véhicule, et un groupe moto-ventilateur pour produire un flux d'air qui traverse le radiateur de refroidissement et le condenseur ;
- la figure 2 représente, en vue éclatée, un dispositif de maintien selon un premier mode de réalisation de la présente invention ;
- la figure 3 représente partiellement, en vue éclatée, un dispositif de maintien selon un second mode de réalisation de la présente invention ; et
- les figures 4A à 4D représentent schématiquement différentes variantes de la forme du logement qui est destiné à recevoir le plot issu de l'équipement, en vue de dessus.

Les dessins contiennent, pour l'essentiel, des éléments de caractère certain. Ils pourront donc non seulement servir à mieux faire comprendre la description, mais aussi contribuer à la définition de l'invention, le cas échéant.

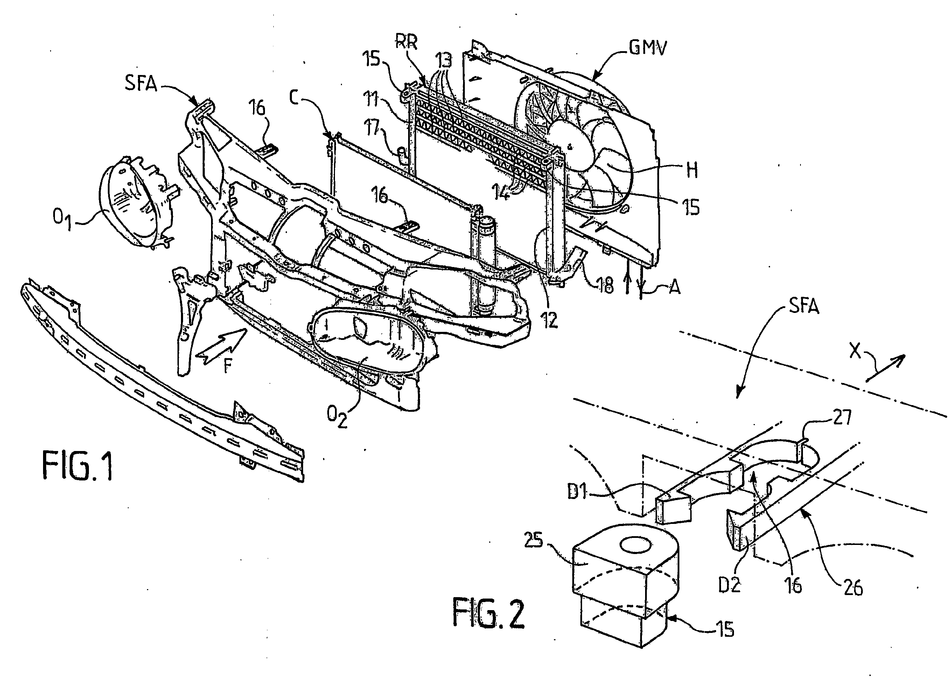

En se référant tout d'abord à la figure 1, le support ou module de face avant SFA d'un véhicule automobile comprend une pluralité d'ouvertures, dont des ouvertures pour des projecteurs 01 et 02, ainsi qu'une ouverture pour recevoir au moins partiellement un radiateur de refroidissement RR du moteur du véhicule.

Ce radiateur RR comprend une entrée' 17 d'un fluide de refroidissement, ainsi qu'une sortie 18 de ce fluide de refroidissement. L'entrée 17 et la sortie 18 sont connectées à des boîtes collectrices respectives 11 et 12 du radiateur RR. Les boîtes collectrices 11 et 12 sont reliées par des tubes 13 d'échange thermique, entre lesquels sont généralement interposées des ailettes perturbatrices 14, en vue d'augmenter l'échange thermique avec un flux d'air (flèche F) qui traverse le radiateur RR.

Généralement, dans le trajet du flux d'air F, un condenseur C d'une boucle de climatisation de l'habitacle du véhicule précède le radiateur de refroidissement RR. Un groupe moto-ventilateur GMV est enfin disposé derrière le radiateur RR. Le groupe moto-ventilateur GMV comprend des connexions d'alimentation A pour déplacer en rotation une hélice H qui, par aspiration (dans l'exemple représenté), produit au moins en partie le flux d'air F qui traverse le radiateur RR et, le cas échéant, le condenseur C.

Le maintien du radiateur de refroidissement RR, sur le support de face avant SFA, est assuré par une liaison de type protubérance/logement. Le radiateur de refroidissement RR comprend des plots 15 faisant saillie, en formant des protubérances destinées à être introduites dans des logements 16 qui sont prévus dans le support de face avant SFA.

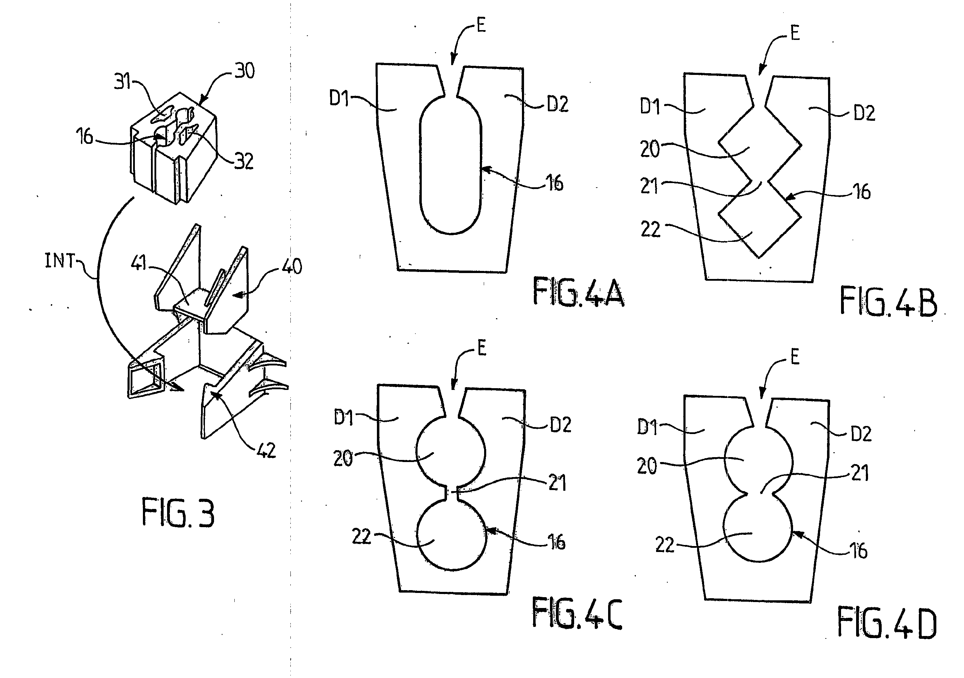

En se référant à la figure 2, le logement 16 est formé, dans un premier mode de réalisation, dans une patte élastique 26, réalisée par exemple dans une matière plastique. Cette patte 26 comporte deux doigts D1 et D2, sensiblement symétriques par rapport à un axe parallèle à l'axe de déplacement du véhicule (flèche X). Les deux doigts D1 et D2 définissent ensemble le logement 16 dont la forme est voisine de celle représentée sur la figure 4C. Le logement 16 comprend d'abord un couloir d'entrée E sensiblement évasé vers l'extérieur de la patte, formant un chanfrein d'entrée pour faciliter l'introduction du plot 15. Le couloir d'entrée E est suivi d'une première ouverture 20, plus large que le couloir d'entrée E et destinée à recevoir le plot 15, dans une position normale de service. La première ouverture 20 est suivie, elle-même, d'un second couloir 21, plus étroit et débouchant sur une seconde ouverture 22 qui est destinée, quant à elle, à recevoir le plot 15 en cas de choc accidentel. Ainsi, la force résultante du choc sur le radiateur RR pousse le plot 15 jusqu'à la seconde ouverture 22.

Selon l'un des avantages que procure la présente invention, le radiateur de refroidissement RR conserve une possibilité de recul, en cas de choc accidentel, ce qui permet de le conserver.

En se référant à nouveau à la figure 2, la patte 26 comprend en outre une zone de faiblesse 27 qui facilite l'écartement des doigts D1 et D2, en vue d'introduire le plot 15 dans le logement 16. Dans ce premier mode de réalisation, la patte 26, réalisée en matière plastique est préférentiellement moulée dans un renfoncement du support de face avant SFA (représenté en traits pointillés).

Avantageusement, le plot 15 comporte, dans une partie supérieure 25 qui est destinée à être introduite dans le logement 16, un enrobage amortisseur, préférentiellement réalisé dans un matériau élastomère, tel qu'un caoutchouc, de qui permet avantageusement d'amortir les vibrations du plot 15 dans son logement 16.

On se réfère maintenant à la figure 3 pour décrire un second mode de réalisation de la présente invention, dans lequel le logement 16 est formé dans un bloc élastomère 30 qui est destiné à être introduit (flèche INT), de préférence par encliquetage, dans une patte élastique 42 solidaire du support de face avant SFA. Dans l'exemple décrit, la patte 42 est réalisée dans une matière plastique. Elle est, de préférence, moulée avec le support de face avant SFA.

Le bloc élastomère 30 comprend, comme dans le premier mode de réalisation ci-avant, un couloir d'entrée suivi d'une première et d'une seconde ouverture qui sont destinées à recevoir le plot 15, respectivement en service normal et en cas de choc accidentel. Avantageusement, le bloc élastomère 30 comprend des évidements latéraux 31 et 32, de part et d'autre du logement 16, qui confèrent au bloc 30 une souplesse suffisante pour se déformer lorsque le plot 15 est introduit dans le couloir d'entrée du logement 16.

Il est prévu en outre une paroi horizontale 41 destinée à venir en appui contre le plot 15 lorsque celui-ci est introduit dans le logement 16, en vue d'absorber les vibrations dans une direction verticale. Des nervures de renfort 40 sont en outre prévues pour rigidifier le contact entre la paroi horizontale 41 et le plot 15.

Ainsi, le bloc élastomère 30 de ce second mode de réalisation, comme l'enrobage amortisseur 25 du plot 15 dans le premier mode de réalisation, permettent d'amortir les vibrations en service du radiateur de refroidissement, lorsqu'il est maintenu par le support de face avant.

On se réfère maintenant aux figures 4A à 4D pour décrire des variantes de la forme du logement 16. Dans la réalisation représentée sur la figure 4A, les deux doigts D1 et D2, symétriques, définissent ensemble un logement 16, de forme oblongue dans cette réalisation, et qui commence par un couloir d'entrée E, sensiblement évasé vers l'extérieur, ce qui facilite l'introduction du plot 15 dans le logement 16. Le terme «oblong» est à prendre au sens large et englobe toutes les variantes représentées sur les figures 4A à 4D, ainsi que d'autres variantes selon lesquelles le logement 16 comprend une grande dimension dans la direction de symétrie des deux doigts D1 et D2, et une petite dimension dans une direction sensiblement perpendiculaire.

En particulier, sur la figure 4A, le logement 16 est préférentiellement plus étroit que le plot 15. Il peut être choisi alors de monter en compression le plot 15 dans une partie supérieure du logement 16, ce montage correspondant à une configuration normale de service. En cas de choc accidentel, le plot 15 se déplace alors vers une partie inférieure du logement 16, le cas échéant venant en butée contre la région de jonction des doigts D1 et D2 (partie inférieure de la figure 4A).

En se référant à la figure 4B, le logement 16 présente une forme générale encore oblongue et comprend deux ouvertures 20 et 22, plus larges qu'un couloir 21, formant un rétrécissement entre les deux ouvertures 20 et 22. Dans cette réalisation, les ouvertures 20 et 22 sont de forme polygonale (ici représentées de forme carré). Cette réalisation convient pour des plots qui seraient prévus suivant une telle forme.

Dans la réalisation de la figure 4C, les ouvertures 20 et 22 sont sensiblement de forme circulaire et sont reliées par un couloir plus étroit 21. Selon les besoins des applications visées, le couloir 21 peut être réduit pour qu'il ne subsiste qu'un rétrécissement 21 (figure 4D) entre les ouvertures 20 et 22, selon la réalisation représentée sur la figure 4D.

Ainsi, dans les réalisations des figures 4B à 4D, les, doigts D1 et D2 sont sensiblement en forme de W, symétriques par rapport à un axe vertical.

Bien entendu, la présente invention ne se limite pas à la forme de réalisation décrite ci-avant à titre d'exemple ; elle s'étend à d'autres variantes.

Ainsi, on comprendra que l'équipement maintenu par le dispositif selon l'invention peut être différent d'un radiateur de refroidissement. Il peut notamment s'agir d'un réservoir de fluide de refroidissement, pour l'alimentation du radiateur décrit ci-avant.

Bien qu'avantageuse, la réalisation consistant à faire maintenir l'équipement par le support de face avant du véhicule n'est décrite ci-avant qu'à titre d'exemple. En variante, l'équipement peut être maintenu directement par une poutre supérieure et/ou une poutre inférieure de la carrosserie du véhicule, au moyen d'un dispositif de maintien au sens de la présente invention.

Comme il est précisé plus haut, le terme «oblong» est à prendre au sens large. Il concerne, de façon générale, un logement qui présent une dimension plus grande dans une direction choisie.

Dans l'exemple décrit ci-avant, cette direction choisie correspond à l'axe de déplacement du véhicule. Avantageusement, cette réalisation offre un degré de liberté en translation du radiateur de refroidissement, en cas de choc, avec une force (ou une accélération) résultante dans la direction de déplacement du véhicule. Cependant, d'autres directions de guidage du plot dans son logement sont envisageables.

Enfin, les formes des éléments représentés sur les figures 2, 3, 4A à 4D, ainsi que les matériaux dans lesquels ces éléments sont réalisés, sont susceptibles de présenter des variantes qui restent néanmoins définies dans le cadre des revendications ci-après.

## Revendications

1. Assemblage d'un équipement de véhicule automobile (RR, C), notamment d'un module d'échange de chaleur, ledit équipement de véhicule comportant au moins un plot faisant saillie dudit équipement (RR) pour le maintenir, et d'un dispositif de maintien dudit équipement de véhicule automobile, ledit dispositif de maintien comprenant au moins un logement (16) destiné à recevoir ledit plot (15), ledit logement comportant une première ouverture (20) recevant le plot (15) dans une position normale de maintien de l'équipement et une seconde ouverture (22) communiquant avec ladite première ouverture (20), **caractérisé en ce que** ladite seconde ouverture (22) reçoit le plot en cas de choc du véhicule et **en ce que** ledit logement (16) assure un guidage en translation du plot (15), ce qui permet de préserver l'équipement en cas de choc du véhicule, lesdites première et seconde ouvertures étant séparées par un couloir ou un rétrécissement (21) sensiblement plus étroit que les ouvertures.

2. Dispositif selon la revendication 1, **caractérisé en ce que** le logement est sensiblement oblong, dans la direction (X) de déplacement du véhicule.

3. Dispositif selon l'une des revendications précédentes, **caractérisé en ce que** le logement se prolonge par un couloir d'entrée (E) sensiblement plus étroit que le logement, ce qui permet d'introduire le plot dans le logement par encliquetage.

4. Dispositif selon l'une des revendications précédentes, **caractérisé en ce qu'**il comporte au moins une patte (26) sensiblement élastique dans laquelle est formé ledit logement.

5. Dispositif selon la revendication 4, **caractérisé en ce que** la patte comprend deux doigts (D1, D2) sensiblement symétriques, entre lesquels est formé ledit logement.

6. Dispositif selon la revendication 5, **caractérisé en ce que** chaque doigt présente sensiblement une forme de W, de sorte que les deux doigts (D1, D2), sensiblement symétriques, définissent ensemble lesdites première (20) et seconde (22) ouvertures, séparées par un rétrécissement (21) formant ledit couloir.

7. Dispositif selon l'une des revendications 1 à 3, **caractérisé en ce qu'**il comporte un bloc amortisseur (30) dans lequel est formé ledit logement.

8. Dispositif selon la revendication 7, **caractérisé en ce qu'**il comporte un réceptacle (42) muni de moyens d'encliquetage du bloc amortisseur dans le réceptacle.

9. Dispositif selon la revendication 8, **caractérisé en ce qu'**il comporte en outre une surface d'appui (41), solidaire du réceptacle et destinée à venir en contact avec une extrémité du plot (25) faisant saillie hors du logement, ce qui permet d'amortir, en service, les vibrations du plot dans une direction sensiblement parallèle à l'axe général du plot.

## Claims

1. Assembly of an item of motor vehicle equipment (RR, C), notably of a heat exchange module, said item of vehicle equipment comprising at least one mount protruding from said item of equipment (RR) in order to hold it, and a device for the retention of said item of motor vehicle equipment, said retention device comprising at least one housing (16) designed to receive said mount (15), said housing comprising a first opening (20) receiving the mount (15) in a normal position for retaining the item of equipment and a second opening (22) communicating with said first opening (20), **characterized in that** the second opening (22) receives the mount in the event of an impact of the vehicle and **in that** said housing (16) guides the mount (15) in translation, which makes it possible to protect the equipment in the case of an impact of the vehicle, said first and second openings being separated by a passageway or a narrowing (21) substantially narrower than the openings.

2. Device according to Claim 1, **characterized in that** the housing is substantially oblong, in the direction (X) of movement of the vehicle.

3. Device according to one of the preceding claims, **characterized in that** the housing is extended by an entrance passageway (E) substantially narrower than the housing, which makes it possible to insert the mount into the housing by snap-fitting.

4. Device according to one of the preceding claims, **characterized in that** it comprises at least one substantially elastic fastener (26) in which said housing is formed.

5. Device according to Claim 4, **characterized in that** the fastener comprises two substantially symmetrical fingers (D1, D2) between which said housing is formed.

6. Device according to Claim 5, **characterized in that** each finger has substantially a W shape, so that the two substantially symmetrical fingers (D1, D2) define together said first opening (20) and second opening (22), separated by a narrowing (21) forming said passageway.

7. Device according to one of Claims 1 to 3, **characterized in that** it comprises a damping block (30) in which said housing is formed.

8. Device according to Claim 7, **characterized in that** it comprises a receptacle (42) furnished with means for snap-fitting the damping block into the receptacle.

9. Device according to Claim 8, **characterized in that** it also comprises a bearing surface (41) secured to the receptacle and designed to come into contact with one end of the fastener (25) protruding outside the housing, which makes it possible, in service, to damp the vibrations of the fastener in a direction substantially parallel to the general axis of the fastener.

## Patentansprüche

1. Zusammenbau einer Kraftfahrzeugausrüstung (RR, C), insbesondere eines Wärmetauschermoduls, wobei die Fahrzeugausrüstung mindestens ein Klötzchen aufweist, das aus der Ausrüstung (RR) vorsteht, um sie zu halten, und einer Haltevorrichtung der Kraftfahrzeugausrüstung, wobei die Haltevorrichtung mindestens eine Aufnahme (16) aufweist, die dazu bestimmt ist, das Klötzchen (15) aufzunehmen, wobei die Aufnahme eine erste Öffnung (20), die das Klötzchen (15) in einer normalen Haltestellung der Ausrüstung aufnimmt, und eine zweite Öffnung (22) aufweist, die mit der ersten Öffnung (20) in Verbindung steht, **dadurch gekennzeichnet, dass** die zweite Öffnung (22) das Klötzchen im Fall eines Aufpralls des Fahrzeugs aufnimmt, und dass die Aufnahme (16) eine Führung des Klötzchens (15) in Translationsrichtung gewährleisten, was es ermöglicht, die Ausrüstung im Fall eines Aufpralls des Fahrzeugs zu schützen, wobei die erste und die zweite Öffnung durch einen Durchgang oder eine Verengung (21) getrennt sind, der (die) deutlich schmaler ist als die Öffnungen.

2. Vorrichtung nach Anspruch 1, **dadurch gekennzeichnet, dass** die Aufnahme im Wesentlichen in der Bewegungsrichtung (X) des Fahrzeugs länglich ist.

3. Vorrichtung nach einem der vorhergehenden Ansprüche, **dadurch gekennzeichnet, dass** die Aufnahme sich durch einen Eingangsdurchgang (E) verlängert, der deutlich schmaler ist als die Aufnahme, was es ermöglicht, das Klötzchen durch Einrasten in die Aufnahme einzuführen.

4. Vorrichtung nach einem der vorhergehenden Ansprüche, **dadurch gekennzeichnet, dass** sie mindestens eine im Wesentlichen elastische Lasche (26) aufweist, in der die Aufnahme ausgebildet ist.

5. Vorrichtung nach Anspruch 4, **dadurch gekennzeichnet, dass** die Lasche zwei im Wesentlichen symmetrische Finger (D1, D2) aufweist, zwischen denen die Aufnahme ausgebildet ist.

6. Vorrichtung nach Anspruch 5, **dadurch gekennzeichnet, dass** jeder Finger im Wesentlichen die Form eines W hat, so dass die zwei im Wesentlichen symmetrischen Finger (D1, D2) zusammen die erste (20) und die zweite Öffnung (22) definierten, die durch eine den Durchgang bildenden Verengung (21) getrennt sind.

7. Vorrichtung nach einem der Ansprüche 1 bis 3, **dadurch gekenntzeichnet, dass** sie einen Dämpfungsblock (30) aufweist, in dem die Aufnahme ausgebildet ist.

8. Vorrichtung nach Anspruch 7, **dadurch gekennzeichnet, dass** sie einen Aufnahmebehälter (42) aufweist, der mit Mitteln zum Einrasten des Dämpfungsblocks in den Behälter versehen ist.

9. Vorrichtung nach Anspruch 8, **dadurch gekennzeichnet, dass** sie außerdem eine Auflagefläche (41) aufweist, die fest mit dem Aufnahmebehälter verbunden und dazu bestimmt ist, mit einem aus der Aufnahme vorstehenden Ende des Klötzchens (25) in Kontakt zu kommen, was es ermöglicht, im Betrieb die Vibrationen des Klötzchens in einer Richtung im Wesentlichen parallel zur allgemeinen Achse des Klötzchens zu dämpfen.
